# EUROPEAN PATENT APPLICATION

(11) **EP 0 712 229 A2**
(43) Date of publication of application: **15.05.1996**
(21) Application number: 95308136.1
(22) Date of filing: 14.11.1995
(51) Int. Cl.: H04M 3/30

(54) **Portable test and communication device**

(30) Priority: 14.11.1994 US 340083
(71) Applicant: HARRIS CORPORATION, Melbourne, FL 32919 (US)
(72) Inventor: Schillaci, Onofrio, Camarillo, California 93010 (US); Rischpater, Raymond William, Felton, California 95018 (US); Horton, Michael D., Ojai, California 93023 (US)
(74) Representative: van Berlyn, Ronald Gilbert

(57) **Abstract**

A user interface for a craftsperson's portable signal processing and communication unit incorporates an intermediate translating mechanism, termed "middleware", that is effectively invisible to an operational support system ((OSS), such as an AT&T CAS, and is operative to generate a text/graphics interface having one or more functionall "buttons". The buttons are displayed on the portable unit's contact-sensitive display screen and are invoked by the craftsperson placing a contact pen against the button. When a button is invoked, the middleware interface generates the appropriate alpha-numeric or other code used by the operational support system to represent the invoked function. Such an implementation of the user interface frees the craftsperson from having to be familiar with OSS codes, or look up in a separate database the required alpha-numeric code formats, employed by such support systems.

## Description

The present invention relates to telephone communication systems and networks, and is particularly directed to a user interface-to-terminal emulation-driven operational support system (OSS) translation mechanism, that is resident in and employed by a craftsperson's portable test/communications device. The mechanism is operative to provide a telephone service provider technician with a reduced complexity text and graphic user interface, the operation of which is converted into an information format that conforms with that expected to be seen by the OSS, thereby facilitating interaction between the craftsperson and the OSS.

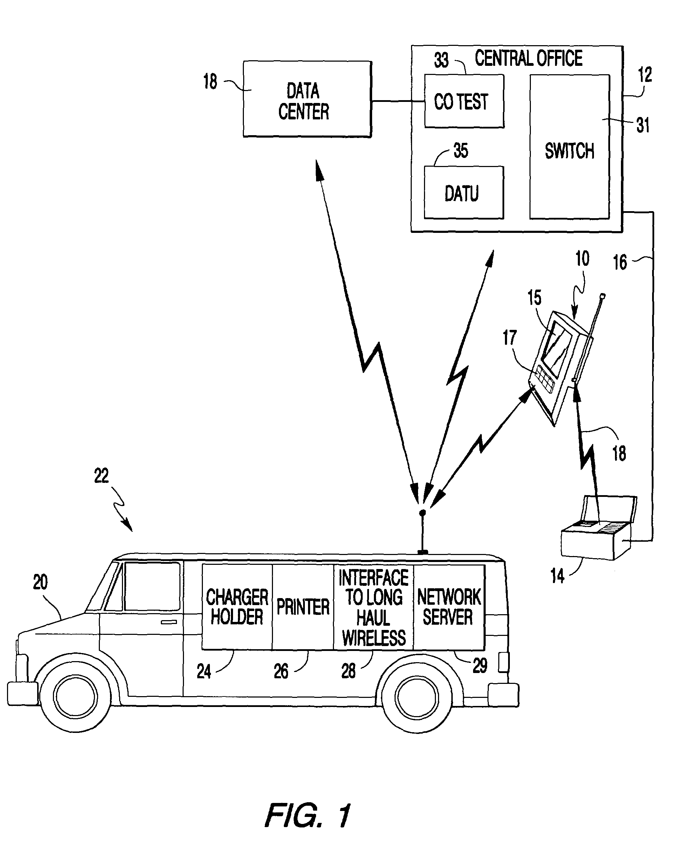

Figure 1 diagrammatically illustrates the configuration of the portable telecommunications test system. The system includes a hand-held personal computer-based test and communications unit 10, through which a craftsperson, who has been directed by a dispatch center to a service site, which may be remotely located with respect to a central office 12 serving a line to be tested (or line under test (LUT)) 16, may communicate with central office 12 and with a generic test head 14 that is connectable to the LUT 16.

The test system functionality of the supervisory control mechanism executed by the internal processor of the craftsperson's hand-held computer unit 10 is intended to provide the service technician with a user-friendly, icon-based, test procedure for facilitating the craftsperson's performance of various tests on a selected line. In so doing, the craftsperson's portable computer is able to interact with multiple types of existing operational support systems (OSS's), as well as provide a platform for add-on information exchanges.

For this purpose, via a contact-sensitive (e.g., pen touch-operated) video display panel 15, and an associated keyboard 17 of hand-held unit 10, the craftsperson may selectively invoke one or more test operations represented by a set of analysis and test function-associated icons. In response to these selections, the internal control processor of unit 10 executes communication and signal processing operations associated with an identified test. The test head 14 proper performs data acquisition on demand from the unit 10, including the execution of functional tests. Test head 14 and unit 10 can be expanded through plug-in cards and software programs for coupling with various diverse types of communication links.

In order to communicate with a remote network facility (central office 12 or data center 18 associated with the central office 12), the craftsperson's hand-held unit 10 contains a transceiver interface, which is further interfaced with a communication and signal processing sub-system on board a technician's service vehicle or van 20. The communication and signal processing sub-system on board the van, in turn, links the craftsperson's unit 10 with the remote network facility, via either a short haul wireless link, or by way of an auxiliary back-up wireline link. The respective communications interfaces within a craftsperson's portable unit and a van's sub-system.

The craftsperson may be provided with an auxiliary voice-activated, wireless headset for conducting wireless voice communications with hand-held computer unit. Such a wireless headset can be used with the hand-held unit 10 and with the test head 14 to run automated tests, with an audio go/no-go indication of the test results being provided to the craftsperson.

The service van's communication and signal processing sub-system 22 includes a battery holder/charging station 24, a printer 26, a long haul wireless interface 28 and a network server 29. Battery holder/charging station 24 is configured to physically receive and store the portable hand-held unit 10, so that, when not in use, the unit may be secured and stowed, and its associated power supply (battery pack) recharged. Printer 26 is available to print out various information such as test results. Long haul wireless interface 28 provides a wireless gateway to long haul wireless services, while network server 29 contains a file server that provides additional processing power and electronic data storage. The network server is operative to perform auxiliary data processing tasks on demand.

Central office facility 12 typically includes a central office switch 31, central office test devices 33, and a line-conditioning device 35, such as a direct access test unit (DATU), or (SASS) transmission conditioning system. The central office test devices 33 are capable of providing an interface with various operational support systems of the data center 18, such as a service vehicle dispatch, outside plant record database, automated testing systems, and electronic network schematics. The line-conditioning device (e.g. DATU or SASS) 35 within central office 12 provides the craftsperson with the ability to selectively conduct a number of tests of a line, by invoking specified key combinations (sequences) from a standard craftsperson's telephone test set.

In the course of conducting a test via test head 14, the craftsperson's portable personal computer unit 10 receives measurement data from the test head and operates on the data to convert the measurement results into usable parameter information. This usable parameter information is then linked to the service vehicle's communication sub-system 22, so that it may be forwarded to a line-conditioning device or automated test equipment in the central office 12.

In a non-limiting example of responding to a trouble ticket that has been issued by a dispatch center and contains a customer service request, the system of Figure 1 operates as follows. After being dispatched to and travelling to a test site (using service vehicle 20), the craftsperson proceeds to couple the test head 14 to the line under test 16. Using the portable computer unit 10, the technician establishes communications with the test head 14 and, via the communication sub-system 22 in van 20, with the central office 12, so that one or more tests of the line may be conducted.

Once the technician has coupled the test head 14 to the line under test, the test application software resident in unit 10 is operative to pull up prescribed display screens, associated with respective test procedures for evaluating the LUT via the contact-sensitive computer display panel 15. In response to the service technician selecting a desired test function, such as by invoking a displayed icon on a display screen, the resident test software of portable computer unit 10 proceeds to interactively generate additional screens and menus, through which the craftsperson specifies further choices for defining parameters required for implementing the selected test. Based upon the choices selected by the craftsperson, computer unit 10 assembles and transmits a message to the test head 14 and to the central office 12 for establishing what test or tests are to be conducted and the parameters associated with those tests.

When a selected test is invoked, the test head measures the response of the line to one or more conditions placed on the line, and transmits the test response data back to the craftsperson's portable computer unit for storage in memory and analysis in accordance with an on-board test or line analysis program. Based upon the results of the processed information, the craftsperson may direct the test device to perform one or more additional tests, until the line has been completely tested.

As pointed out above, data center 18 contains various operational support systems with which the test devices of central office facility 12 may be interfaced, including automated craft dispatch - work order manager applications, such as an AT&T CAS (craft access system) application, a Bellcore technician access network (TAN), or an automated work administration system (AWAS). Because these "legacy" OSS's have been configured to employ terminal emulation techniques, the user interfaces with which they are employed require that the user enter possess substantial training and skill in such techniques in order to be able to successfully enter prescribed sequences of alpha-numeric codes associated with the function or functions to be invoked. Where a display screen interface is used, the technician may use a keypad to delineate the required code sequence or string.

Unfortunately, because telephone service providers are currently implementing a substantial reallocation of resources, including both equipment and personnel, they are not expected to employ service technicians who are highly skilled and familiar with the data formats and protocols of such legacy OSS's. As a consequence, any craft platform which is intended to successfully interface with an existing OSS must do so in a manner that not only fulfills the longstanding service provider's requirement of not requiring a change to or replacement of the service provider's existing equipment, but does not depend upon the skill of the technician.

The test system functionality of the supervisory control mechanism executed by the internal processor of the craftsperson's hand-held computer unit described in the '317 application is intended to provide the service technician with a user-friendly, icon-based, test procedure for facilitating the craftsperson performance of various tests on a selected line, whereby the craftsperson is able to interact with multiple types of existing operational support systems. Although the display screen-based user interface of such a computer unit has both contact-sensitive icon and keypad input elements, thereby providing flexibility in what may be presented as an output to and accepted as an input by the technician, and thus allows a skilled technician to key in codes formatted in accordance with legacy OSS requirements, it is preferable that the user interface for OSS applications be implemented so that it can be used by a technician who is not necessarily familiar with the above-described OSS code requirements, yet still fulfills the service provider's requirement of not affecting the OSS itself.

The present invention includes a method of enabling a craftsperson to interface messages with an operational support system associated with a telephone facility of a telephone network, said operational support system requiring messages thereto to be encoded in accordance with a prescribed code character format, comprising the steps of:
(a) providing a craftsperson's communication and processing unit through which a craftsperson, who may be dispatched to a service site that is remotely located with respect to said telephone facility serving a subscriber line, may communicate with a test system of said telephone network and with a test head that is connectable to said subscriber line, said craftsperson's communication and processing unit having an input/output device, including a visual display, through which information input by said craftsperson is converted into prescribed control signals and transmitted to said test system and through which information associated with the operation of said test system is presented to said craftsperson;
(b) generating, by way of a display screen of said visual display, a graphics element which specifies a message to be asserted by said craftsperson for transmission to said operational support system; and
(c) in response to said craftsperson invoking said graphics element, generating a code sequence representative of said message, said code sequence being formatted in accordance with said prescribed code character format, for transmission to said operational support system by said craftsperson's communication and processing unit.

The invention also includes a craftsperson, communication, and processing unit A craftsperson's communication and processing unit, for use with a craftsperson's communication and processing unit through which a craftsperson, who may be dispatched to a service site that is remotely located with respect to a telephone facility serving a subscriber line, may communicate with a test system of a telephone network and with a test head that is connectable to said subscriber line, having an input/output device, including a visual display, through which information input by said craftsperson is converted into prescribed control signals and transmitted to said test system and through which information associated with the operation of said test system is presented to said craftsperson, a mechanism for enabling a craftsperson to interface messages with an operational support system associated with said telephone facility of said telephone network, said operational support system requiring messages thereto to be encoded in accordance with a prescribed code character format, said mechanism comprising:
a text/graphics user interface generator which is operative to present, by way of a display screen of said visual display, a graphics element that specifies a functional message to be asserted by said craftsperson for transmission to said operational support system; and
a code generator which, in response to invoking of said graphics element by said craftsperson, is operative to generate generating a code string sequence representative of said message, said code string sequence being formatted in accordance with said prescribed code character format, for transmission to said operational support system by said craftsperson's communication and processing unit.

Conveniently, these objectives are successfully addressed by a user interface that incorporates an intermediate translating mechanism, hereinafter termed "middleware", that is effectively invisible to the OSS and is operative to generate a text/graphics interface having one or more functional "buttons", which are displayed on the portable unit's contact-sensitive display screen and which are invoked by the craftsperson placing a contact pen against the button. When a button is invoked, the middleware interface generates the appropriate alpha-numeric or other code used by the OSS to represent the invoked function. Such an implementation of the user interface frees the craftsperson from having to be familiar with OSS codes, or look up in a separate database the required alpha-numeric code formats, employed by such support systems.

The middleware mechanism includes an error detection protocol engine, which interfaces with a remote data connection to which incoming data strings sourced from a dispatch system (e.g. a CAS-based state manager) are supplied, and from which data strings generated by the middleware mechanism are output to the remote (CAS) application system. The protocol engine is operative to check these data strings for errors and for data packet flow control.

The incoming data string is forwarded from the protocol engine to a translator/parser, which is operative to parse the received data string, in accordance with state information supplied by an associated state manager and to couple the parsed data to a context selector. Under control of the state manager, the context selector examines the parsed data from translator/parser and selectively accesses one or more token lists stored within a token/icon library. Which token lists are accessed from the token/icon library depends upon the present state of the operational sequence being exercised by the user, as determined by the state manager. The state manager keeps track of the received data string and the contents of and invoking of functional icons ("buttons") on the user display screen being presented to the craftsperson.

Each token list in within the token/icon library comprises a bidirectional bit map which associates text strings with display screen icons and other user interface information. As a token/icon list is accessed, it is compared by the translator/parser with the parsed data string. When a match is found, the corresponding icon is fetched and forwarded to a graphics kernel, through which the contents of the image displayed on the display screen of the craft unit are generated, so that the icon may be presented to the craftsperson as a user interface input/output "button".

When a displayed icon/button is invoked by the craftsperson, the state manager forwards the associated icon symbology data to the translator/parser and the context selector, which accesses the requisite token/icon lists associated with the invoked token and any auxiliary user information input by the craftsperson. The translator/parser compares the contents of the accessed list with the icon symbology data with the accessed list and assembles the requisite text data string for transmission to the CAS dispatch system. The assembled text data string is formatted and framed by the protocol engine and forwarded to the dispatch system.

The invention will now be described, by way of example, with reference to the accompanying drawings in which
Figure 1 diagrammatically illustrates the general configuration of the portable telecommunications test system described;
Figure 2 shows a user interface in the form of a display screen, containing one or more contact-invoked functional icons associated with respective test procedures for evaluating a line under test;
Figure 3 shows the functional architecture of the display screen text/graphics user interface to OSS code conversion middleware mechanism of the present invention;
Figure 4 diagrammatically illustrates the respective components and the relative associations of such components of the middleware mechanism of the present invention; and
Figure 5 is an operational flow sequence showing the steps of a trouble-shooting strategy-generating mechanism described in the above-referenced Horton et al application, in which the middleware scheme of the present invention is employed during access to an OSS (a CAS in the illustrated example).

The present invention resides primarily in what is effectively an information processing sub-system embedded within the supervisory control software resident in the above-referenced craftsperson's portable computer unit. In order not to obscure the disclosure, the invention has been illustrated in readily understandable block diagram format.

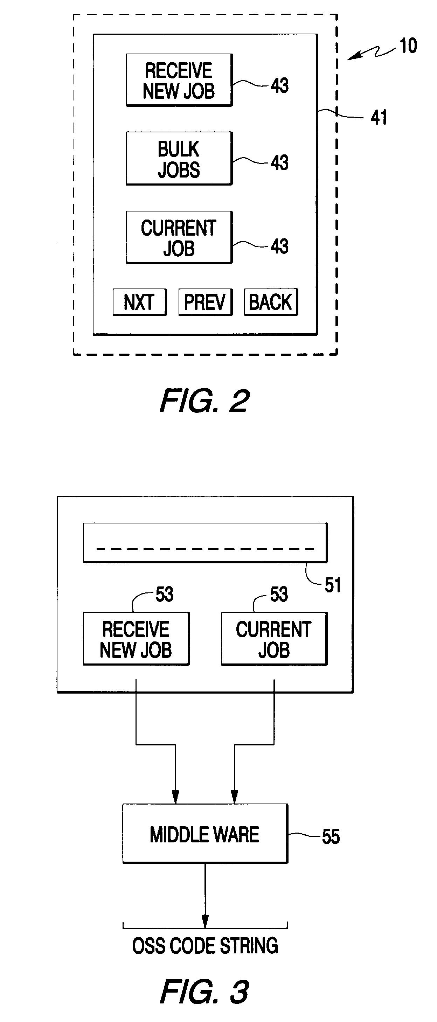

When a technician has coupled the test head to the line under test, test application software resident in the portable unit 10 generates a user interface in the form of a display screen, such as that shown at 41 in Figure 2, containing one or more contact-invoked functional icons 43 associated with respective test procedures for evaluating the line under test. The service technician selects a test function by placing a contact pen against a function-associated "button". He may also key in additional information via the unit's keypad. The resident test and control software interactively generates additional screens and menus, through which the craftsperson specifies choices for defining parameters required for implementing the selected test. Then, based upon the craftsperson's entries, computer unit 10 assembles and transmits a message to the test head 14 and to the central office 12 for establishing what test or tests are to be conducted and the parameters associated with those tests.

When a terminal emulation-based operational support system within the data center 18 is accessed, it is necessary to use specified (alpha-numeric) code sequences associated with its operation. Although, the control mechanism which generates the user interface on display panel 15 may be designed, so that it prompts the technician to key in the required code sequence or string, to do so will require that the technician be sufficiently familiar with OSS code formats to successfully complete the task.

In accordance with the "middleware" display screen user interface mechanism of the invention, diagrammatically illustrated in Figure 3, rather than generate a screen interface that requires the user to "fill in" OSS code data, such as in an 'entry box' 51, the user interface is configured to include one or more functional "buttons" 53, which are invoked by the craftsperson placing a contact pen against the button. In response to invoking a button, a middleware interface routine 55, resident in the control software of the unit 10, generates appropriate alpha-numeric or other code strings used by the accessed OSS to represent the invoked function. These code strings are then assembled by the unit's transceiver interface for transmission over the wireless or wireline communication link.

Middleware interface routine 55 is not limited to any specific implementation; as one example, it may comprise a set of soft-tables the contents of which map a given user interface environment, akin to the Windows (TM Microsoft Corp.) presentation, to function code sets employed by a specified operational support system, such as one of the above-identified CAS, TAN, and AWAS systems. Alternatively, a decoding sub-routine may be installed within the computer unit's supervisory control mechanism, which is operative to decode each button-descriptor of the portable computer unit's resident program, and generate its corresponding OSS code. Regardless of the mechanism chosen, employing a middleware user interface translator frees the craftsperson from having to be familiar with OSS codes, or look up in a separate database the required alpha-numeric code formats, employed by legacy operational support systems.

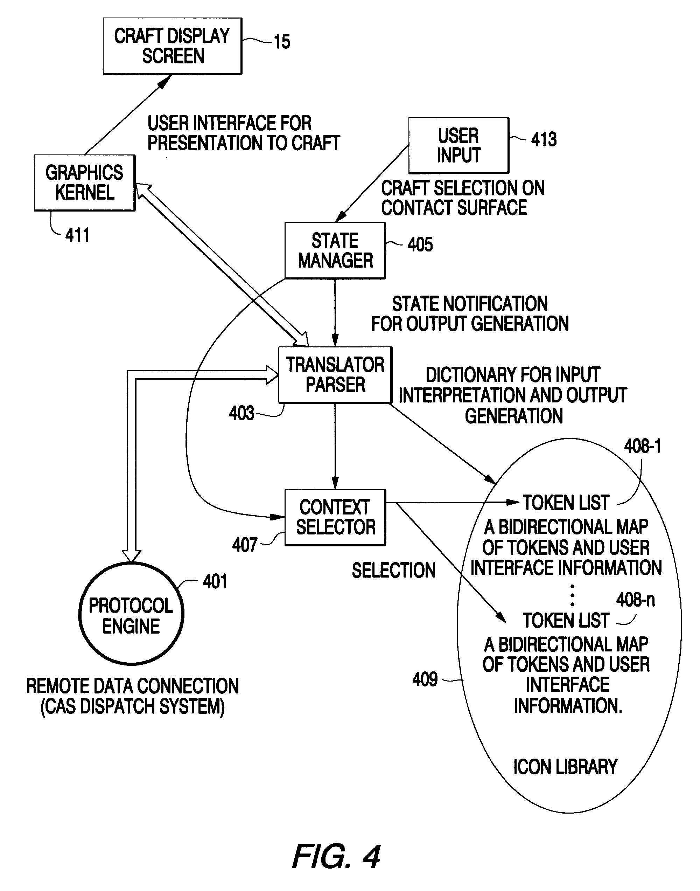

Figure 4 diagrammatically illustrates the respective components and the relative associations of such components of the middleware mechanism of the present invention. Shown at 401 is an error detection protocol engine, which interfaces with a remote data connection to which incoming data strings sourced from a dispatch system (e.g. a CAS-based state manager) are supplied, and from which data strings generated by the middleware mechanism are output to the remote (CAS) application system. In the course of interfacing the data, protocol engine 401 is operative to check these data strings for errors and for data packet flow control.

An incoming data string from a remote dispatch system may be representative of the contents of a variety of information sources, such as a trouble ticket, facility information identifying the physical location of telephone wires (e.g. a sidewalk terminal box), a craftsperson mailbox, and parametric data (associated with the results of testing conducted from a test system (e.g. a direct access test unit) within the central office). An incoming data string is forwarded from protocol engine 401 to a translator/parser 403.

For a incoming data string from protocol engine 401, translator/parser 403 is operative to parse the received data string, in accordance with state information supplied by an associated (dispatch system-based (e.g. CAS)) state manager 405 and to couple the parsed data to a context selector 407. Under control of state manager 405, context selector 407 examines the parsed data from translator/parser 403 and selectively accesses one or more token lists 408-1, ..., 408-n, stored within a token/icon dictionary or library 409. Which token lists are accessed from the token/icon library 409 depends upon the present state of the operational sequence being exercised by the user (which menu is currently active), as determined by state manager 405, which monitors or keeps track of the received data string and the contents of and invoking of functional "buttons" on the user display screen being presented to the craftsperson.

Each token list in within token/icon library 409 comprises a bidirectional bit map which associates text strings with display screen icons and other user interface information. As a token/icon list is accessed from library 409, it is coupled to translator/parser 403, which compares the parsed data string to the contents of the list. When a match is found, the corresponding icon is fetched and forwarded to a graphics kernel 411, through which the contents of the image displayed on the display screen 15 of craft unit 10 are generated, so that the icon may be presented to the craftsperson as a user interface input/output "button".

When a displayed icon/button is invoked by the craftsperson, as designated by user input 413, the state manager 405 forwards the associated icon symbology data to translator/parser 403, and context selector 407, which accesses the requisite token/icon lists associated with the invoked token and any auxiliary user information input by the craftsperson. Translator/parser 403 compares the contents of the accessed list with the icon symbology data with the accessed list and assembles the requisite text data string for transmission to the remote data (e.g. CAS dispatch) system. As described above, the assembled text data string is framed and formatted by protocol engine 401 and forwarded to the dispatch system.

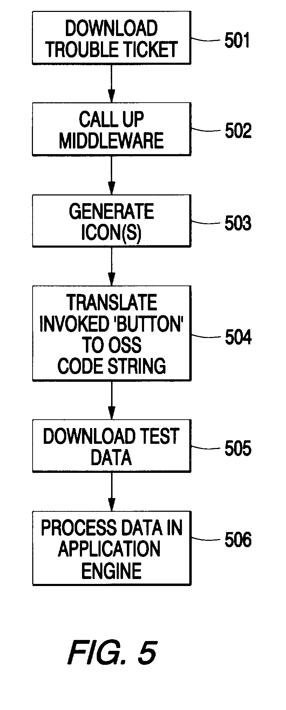

Referring now to Figure 5, there is shown an operational flow sequence showing the steps of the trouble-shooting strategy-generating mechanism described in the above-referenced Horton et al application, in which the middleware scheme of the present invention, described above with reference to Figure 4, is employed in the course of an access to an OSS (a CAS in the present example). As described in the '317 application, when a subscriber or customer places a service call to an automated service repair facility, the administrator at the repair facility confirms the request and generates a trouble ticket. A craftsperson is then dispatched to a specified location at which the line that prompted the reported problem may be tested and serviced.

Upon arriving at the job site, and establishing a communication with the necessary remote facility (central office and associated data center) via the wireless - wireline communications sub-systems contained in the portable computer unit and service vehicle, as described in the above-referenced Schillaci et al application, in step 501, the technician downloads whatever information is available for the trouble ticket being serviced.

This initial operation customarily involves the use of a work order manager application, such as a CAS application, and requires the craftsperson to exercise test equipment, such as a SASS transmission conditioning system, or a direct access test unit (DATU), as described in the above-referenced Heins et al application, in order to provide preliminary parametric data for the line being serviced, that will enable the application engine to estimate the cause of the fault.

When accessing the CAS application of the data center 18, that portion of the embedded supervisory and control software of unit 10 which controls the presentation of the user interface on display panel 15 calls up the appropriate middleware mechanism in step 502, and uses this middleware to generate contact-sensitive icons or buttons on the craft's display panel, as shown at step 503. In step 504, the invoked button is translated or converted into the OSS code expected to be seen by the CAS at the data center.

When a measurement is conducted, the measurement data derived from the test equipment is downloaded in step 505 into the shared database and processed by the application engine in step 506, so that a trouble-shooting strategy based upon a diagnostically evaluation of the trouble ticket and available measurement data stored in the shared database is produced, as described in the Horton et al application.

Advantageously, each displayed user interface (menu screen) includes a "Help" icon which, when invoked, causes the application engine to display a message to the user indicating the results of its analysis of the information currently available in the knowledge and shared databases and recommends what the technician should do next.

Namely, in step 506, an instruction message associated with the selected method is displayed to the user. For example, if the preliminary information provided by the trouble ticket and the results of the initial MLT measurements are sufficient to arrive at a cause of the fault, a location and repair scenario message might be generated. On the other hand, if further testing of the line is necessary, the displayed message may instruct the user to again exercise one or more additional tests. These help/instruction message screens are successively generated, as necessary, and the user is instructed to derive additional information, for example, by exercising the test head, until the application engine has refined a field of potential causes to a single probable source. A message not only represents the results of the engine's analysis of the trouble ticket and test and parameter data, but it serves to provide practical information to the technician. The craftsperson may then proceed to carry out the suggested correction procedure, to remedy the fault. Upon completion of this exercise, the line may again be tested to verify the repair.

The above-described objective of providing a user interface for OSS applications that can be readily employed by a technician who is not necessarily familiar with the OSS code requirements, yet still fulfills the service provider's requirement of not affecting the OSS itself, is successfully addressed by a "middleware" translating mechanism. Advantageously, the middleware mechanism is both invisible to the OSS and provides to the user a user-friendly text/graphics interface in the form of one of more functional "buttons" which are displayed on the portable unit's contact-sensitive display screen and which are easily invoked by the craftsperson placing a contact pen against the button

When a button is invoked, the middleware interface generates the appropriate alpha-numeric or other code used by the OSS to represent the invoked function. As described, the middleware user interface frees the craftsperson from having to be familiar with OSS codes, or look up in a separate database the required alpha-numeric code formats, employed by such support systems.

A user interface for a craftsperson's portable signal processing and communication unit incorporates an intermediate translating mechanism, termed "middleware", that is effectively invisible to an operational support system ((OSS), such as an AT&T CAS, and is operative to generate a text/graphics interface having one or more functional "buttons". The buttons are displayed on the portable unit's contact-sensitive display screen and are invoked by the craftsperson placing a contact pen against the button. When a button is invoked, the middleware interface generates the appropriate alpha-numeric or other code used by the operational support system to represent the invoked function. Such an implementation of the user interface frees the craftsperson from having to be familiar with OSS codes, or look up in a separate database the required alpha-numeric code formats, employed by such support systems.

## Claims

1. A method of enabling a craftsperson to interface messages with an operational support system associated with a telephone facility of a telephone network, said operational support system requiring messages thereto to be encoded in accordance with a prescribed code character format, comprising the steps of:
(a) providing a craftsperson's communication and processing unit through which a craftsperson, who may be dispatched to a service site that is remotely located with respect to said telephone facility serving a subscriber line, may communicate with a test system of said telephone network and with a test head that is connectable to said subscriber line, said craftsperson's communication and processing unit having an input/output device, including a visual display, through which information input by said craftsperson is converted into prescribed control signals and transmitted to said test system and through which information associated with the operation of said test system is presented to said craftsperson;
(b) generating, by way of a display screen of said visual display, a graphics element which specifies a message to be asserted by said craftsperson for transmission to said operational support system; and
(c) in response to said craftsperson invoking said graphics element, generating a code sequence representative of said message, said code sequence being formatted in accordance with said prescribed code character format, for transmission to said operational support system by said craftsperson's communication and processing unit.

2. A method as claimed in claim 1, wherein said graphics element comprises a functional button, which is invoked by the craftsperson contacting said displayed button.

3. A method as claimed in claim 1 or 2, wherein step (c) comprises, in response to said craftsperson invoking said graphics element, generating an alpha-numeric code string employed by said operational support system to represent the invoked function, said code string being assembled for transmission to said operat ional support system by said craftsperson's communication and processing unit.

4. A method as claimed in any one of claims 1 to 3, wherein step (c) comprises storing a plurality of code string sequences, each of which is formatted in accordance with said prescribed code character format, respectively associated with a plurality of function-associated messages to which said operational support system is responsive and, in response to said craftsperson invoking said graphics element, accessing a selected one of said stored code string sequences for transmission to said operational support system by said craftsperson's communication and processing unit.

5. A craftsperson's communication and processing unit, for use with a craftsperson's communication and processing unit through which a craftsperson, who may be dispatched to a service site that is remotely located with respect to a telephone facility serving a subscriber line, may communicate with a test system of a telephone network and with a test head that is connectable to said subscriber line, having an input/output device, including a visual display, through which information input by said craftsperson is converted into prescribed control signals and transmitted to said test system and through which information associated with the operation of said test system is presented to said craftsperson, a mechanism for enabling a craftsperson to interface messages with an operational support system associated with said telephone facility of said telephone network, said operational support system requiring messages thereto to be encoded in accordance with a prescribed code character format, said mechanism comprising:
a text/graphics user interface generator which is operative to present, by way of a display screen of said visual display, a graphics element that specifies a functional message to be asserted by said craftsperson for transmission to said operational support system; and
a code generator which, in response to invoking of said graphics element by said craftsperson, is operative to generate generating a code string sequence representative of said message, said code string sequence being formatted in accordance with said prescribed code character format, for transmission to said operational support system by said craftsperson's communication and processing unit.

6. A communication and processing unit as claimed in claim 5, wherein said graphics element comprises a functional button, which is invoked by the craftsperson contacting said displayed button.

7. A communication and processing unit as claimed in claim 5 or 6, wherein said code generator is operative, in response to said craftsperson invoking said graphics element, to generate an alpha-numeric code string employed by said operational support system to represent the invoked function, said code string being assembled for transmission to said operational support system by said craftsperson's communication and processing unit.

8. A communication and processing unit as claimed in any one of claims 5 to 7, wherein said code generator includes memory which stores a plurality of code string sequences, each of which is formatted in accordance with said prescribed code character format, respectively associated with a plurality of function-associated messages to which said operational support system is responsive, and wherein said code generator is operative, in response to said craftsperson invoking said graphics element, to access a selected one of said stored code string sequences for transmission to said operational support system by said craftsperson's communication and processing unit.
